# EUROPEAN PATENT APPLICATION

(11) **EP 4 553 748 A1**
(43) Date of publication of application: **14.05.2025**
(21) Application number: 22950230.7
(22) Date of filing: 06.07.2022
(51) Int. Cl.: G06Q 50/10

(54) **CARBON MANAGEMENT SYSTEM AND COMPUTATION PROCESSING DEVICE**

(71) Applicant: Hitachi, Ltd., Tokyo 100-8280 (JP)
(72) Inventor: INAGAKI, Ryohei, Tokyo 100-8280 (JP); IIZUKA, Hidehiro, Tokyo 100-8280 (JP); NAKATANI, Takeshi, Tokyo 100-8280 (JP); MAKINO, Shigeki, Tokyo 100-8280 (JP)
(74) Representative: Mewburn Ellis LLP
(86) International application number: PCT/JP2022/026846
(87) International publication number: WO 2024/009436

(57) **Abstract**

Provided is a carbon management system and the like which are capable of adjusting supply/demand balance of CO₂. A carbon management system (100) comprises: a plurality of discharge sources which discharge an exhaust gas containing CO₂; a CO₂ recovery facility (1) which separates and recovers CO₂ from the exhaust gas discharged from the plurality of discharge sources; a conduit (2a to 2c) which is provided between the plurality of discharge sources and the CO₂ recovery facility (1) such that the exhaust gas discharged from the discharge sources is collected in the CO₂ recovery facility (1); and a computation processing device (3) which sets an operating condition of at least one of the plurality of discharge sources or an operating condition of the CO₂ recovery facility (1).

## Description

### TECHNICAL FIELD

The present invention relates to a carbon management system and a computation processing device.

### BACKGROUND ART

Although expansion of introduction of renewable energy and electrification of facilities are underway in order to achieve carbon neutral societies, facilities using fossil fuels will remain to a certain extent as predicted by the IEA (International Energy Agency) as well. For this reason, introduction of CO₂ reduction technologies is essential. For example, technologies described in Patent Literatures 1 and 2 are known regarding recovery of CO₂ discharged from factories and the like.

Specifically, Patent Literature 1 discloses a system that converts discharge of CO₂ to costs, evaluates the costs of the process path, and proposes an optimum path.

In addition, Patent Literature 2 discloses an information management system for managing identification information of a user of a CO₂ recovery apparatus and information on the CO₂ recovery amount, the use application, and use amount among a CO₂ collection station, a transport vehicle, a processing factory for converting CO₂ into fuel, and an information management center.

### CITATION LIST

### Patent Literature

Patent Literature 1: US2009/0177505A1
Patent Literature 2: JP2021-77028A

### SUMMARY OF INVENTION

### Technical Problem

Patent Literatures 1 and 2 do not disclose an operation of a CO₂ recovery facility or a CO₂ recycling facility considering a supply/demand balance of CO₂ or a carbon-containing substance including CO₂. In a concept in which a plurality of facilities are connected, a system which adjusts a supply/demand balance of CO₂ or a recycled carbon-containing substance has been demanded in order to operate a CO₂ recovery facility, a CO₂ recycling facility, and the like, which are major constituent elements.

In view of this, an object of the present invention is to provide a carbon management system and the like which are capable of adjusting a supply/demand balance of CO₂ or a carbon-containing substance.

### Solution to Problem

To solve the above-described problem, a carbon management system according to the present invention comprises: a plurality of discharge sources which discharge an exhaust gas containing CO₂; a CO₂ recovery facility which separates and recovers CO₂ from the exhaust gas discharged from the plurality of discharge sources; a conduit which is provided between the plurality of discharge sources and the CO₂ recovery facility such that the exhaust gas discharged from the discharge sources is collected in the CO₂ recovery facility; and a computation processing device which sets an operating condition of at least one of the plurality of discharge sources or an operating condition of the CO₂ recovery facility.

### Advantageous Effects of Invention

The present invention makes it possible to provide a carbon management system and the like which are capable of adjusting a supply/demand balance of CO₂ or a carbon-containing substance.

### BRIEF DESCRIPTION OF DRAWINGS

FIG. 1 is a configuration diagram of a carbon management system according to a first embodiment.
FIG. 2 is a flowchart showing processing in the carbon management system according to the first embodiment.
FIG. 3A is an explanatory diagram of a CO₂ discharge amount plan in a case where a CO₂ recovery amount is predicted to temporarily exceed an upper limit in a CO₂ recovery facility in the carbon management system according to the first embodiment.
FIG. 3B is an explanatory diagram of the CO₂ discharge amount plan after the CO₂ discharge amount plan has been reviewed in the carbon management system according to the first embodiment.
FIG. 3C is an explanatory diagram regarding an actual CO₂ discharge amount in the carbon management system according to the first embodiment.
FIG. 4 is a configuration diagram of a carbon management system according to a second embodiment.
FIG. 5 is a flowchart showing processing in the carbon management system according to the second embodiment.
FIG. 6A is an explanatory diagram of a CO₂ discharge amount plan in a case where a CO₂ recovery amount is predicted to temporarily exceed an upper limit in a CO₂ recovery facility in the carbon management system according to the second embodiment.
FIG. 6B is an explanatory diagram after a CO₂ accumulated amount has been reviewed in the carbon management system according to the second embodiment.
FIG. 6C is an explanatory diagram showing another example after the CO₂ accumulated amount has been reviewed in the carbon management system according to the second embodiment.
FIG. 7 is a configuration diagram of a carbon management system according to a third embodiment.
FIG. 8 is a flowchart showing processing in the carbon management system according to the third embodiment.
FIG. 9A is an explanatory diagram showing transitions of predicted values of a CO₂ discharge amount and a CO₂ concentration of a thermal power station in an area A in the carbon management system according to the third embodiment.
FIG. 9B is an explanatory diagram showing transitions of predicted values of CO₂ discharge amounts and CO₂ concentrations of a factories 31a, 31b, and 31n in an area B in the carbon management system according to the third embodiment.
FIG. 9C is an explanatory diagram showing transitions of a CO₂ recovery amount and a CO₂ concentration in a CO₂ recovery facility in the carbon management system according to the third embodiment.
FIG. 9D is an explanatory diagram showing transitions of the predicted values of the CO₂ discharge amount and the CO₂ concentration of the thermal power station in the area A in a case where a CO₂ concentrating facility is operated in the carbon management system according to the third embodiment.
FIG. 9E is an explanatory diagram showing transitions of predicted values of the CO₂ discharge amounts and the CO₂ concentrations of the factories 31a, 31b, and 31n in the area B in a case where the CO₂ concentrating facility is operated in the carbon management system according to the third embodiment.
FIG. 9F is an explanatory diagram showing actual values of the CO₂ recovery amount and the CO₂ concentration in the CO₂ recovery facility in the carbon management system according to the third embodiment.
FIG. 10 is a configuration diagram of carbon management systems according to fourth and fifth embodiments.

### DESCRIPTION OF EMBODIMENTS

Hereinafter, each embodiment of the present invention will be described by using the drawings. Note that the same configurations are denoted by the same reference signs, and in the case where a description is repetitive, the description will be omitted in some cases. In addition, the present invention is not limited to each embodiment given below.

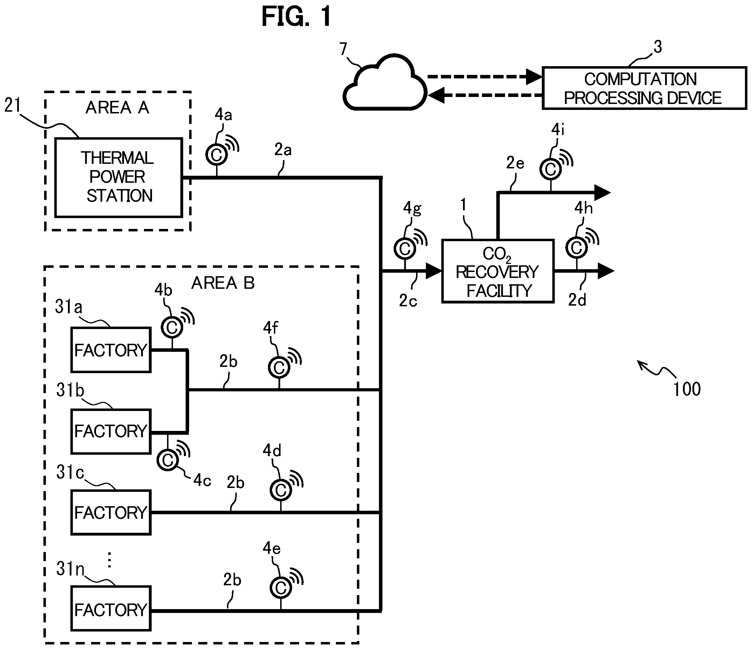

A carbon management system 100 (see FIG. 1) according to one embodiment of the present invention is configured to collect a plurality of exhaust gases containing CO₂ in areas such as an industrial park where the exhaust gases containing CO₂ are discharged, collectively recover CO₂, and supply CO₂ to facilities downstream of the carbon management system 100. This makes it possible to disperse the burden of costs associated with the introduction of CO₂ reduction technologies, and further to reduce the load of each element facility and manage supplies and demands.

### <<First Embodiment>>

FIG. 1 is a configuration diagram of the carbon management system 100 according to a first embodiment. The carbon management system 100 includes: a plurality of discharge sources (a thermal power station 21 and factories 31a to 31n in the example of FIG. 1) which discharge exhaust gases containing CO₂ (carbon dioxide); a CO₂ recovery facility 1 which collects the exhaust gases discharged from the plurality of discharge sources and separates and recovers CO₂ from the collected exhaust gases; conduits 2a to 2c which guide the exhaust gases discharged from the plurality of discharge sources to the CO₂ recovery facility 1; and a computation processing device 3 which sets an operating plan (operating condition) of at least one of the plurality of discharge sources or an operating plan (operating condition) of the CO₂ recovery facility 1. The plurality of discharge sources includes, for example, a discharge source which discharges a large amount and a high concentration of CO₂ and a discharge source which discharges a smaller amount or a lower concentration of CO₂ than the former discharge source. In an area A, there is a discharge source which discharges a large amount and a high concentration of CO₂. As such a discharge source, a thermal power station 21 is provided in the example of FIG. 1. The thermal power station 21 includes, for example, a gas thermal power station, a coal thermal power station, a steel plant, and the like. The conduits 2a to 2c are provided between the discharge sources and the CO₂ recovery facility 1, and are configured such that the exhaust gases discharged from the plurality of discharge sources are collected in the CO₂ recovery facility 1.

Near the area A, there is an area B in which facilities including discharge sources with a lower concentration and a lower discharge amount of CO₂ than the discharge source in the area A are gathered. The area B includes, for example, an industrial district, an industrial park, and the like. In the area B, there are factories 31a to 31n. Businesses in these factories 31a to 31n include, for example, the chemical product production industry, the food processing industry, the iron steel industry, the cement industry, and the like.

To the respective factories 31a to 31n in the area B, the conduits 2b are connected, respectively. Then, the exhaust gas discharged from each of the factories 31a to 31n and the exhaust gas discharged from the thermal power station 21 flow through the conduit 2b and the conduit 2a, respectively, join together in the conduit 2c, and the exhaust gases thus joined are guided to the CO₂ recovery facility 1 by the conduit 2c. That is, the exhaust gases discharged from the area A and the area B are supplied to the CO₂ recovery facility 1 through the conduits 2a and 2b. Note that in the first embodiment, an example in which the exhaust gases to be supplied from the areas A and B to the CO₂ recovery facility 1 are supplied through the conduits 2a and 2b will be described; however, for the supply of the exhaust gases from the CO₂ discharge sources to the CO₂ recovery facility 1, a transport vehicle (not shown) may be used, for example.

The CO₂ recovery facility 1 has a function of recovering CO₂ in an exhaust gas. The method for recovering CO₂ includes, for example, a chemical absorption method which brings an alkaline CO₂ absorption liquid and an exhaust gas into contact to cause the CO₂ absorption liquid to absorb CO₂ in the exhaust gas. Besides, there are a physical adsorption method which uses an adsorption agent utilizing a Van der Waals' force, a chemical adsorption method which brings an alkaline CO₂ adsorption material (solid) and an exhaust gas into contact to cause the CO₂ adsorption material to adsorb CO₂ in the exhaust gas, and the like. The CO₂ recovery facility 1 may be installed in a site different from the site of a discharge source, or may be installed in the same site (in the factory) as that of a discharge source. That is, the CO₂ recovery facility 1 may be provided in a site in which any of the plurality of discharge sources is disposed.

Note that the example of FIG. 1 has a configuration in which the conduit 2a through which the exhaust gas discharged from the area A flows and the conduits 2b through which the exhaust gas discharged from the area B flows are connected to the conduit 2c to be joined, and thereafter the exhaust gases are supplied to the CO₂ recovery facility 1, the configuration is not limited to this. For example, the exhaust gas from the area A and the exhaust gas from the area B may be each individually supplied to the CO₂ recovery facility 1. Note that it is preferable that the exhaust gases of the conduit 2a of the area A and the conduits 2b of the area B be brought together (joined) at the conduit 2c before the CO₂ recovery facility 1, and thereafter be supplied to the CO₂ recovery facility 1, because CO₂ to be supplied to the CO₂ recovery facility 1 can be collectively managed.

By supplying the exhaust gases generated in the plurality of discharge sources to the CO₂ recovery facility 1 all together to separate and recover CO₂ as in the first embodiment, it becomes possible to reduce the burden of costs associated with a reduction in CO₂ discharge amount. In addition, for the owner of the CO₂ recovery facility 1, the operating rate of the CO₂ recovery facility 1 can be improved.

As shown in FIG. 1, at predetermined portions of the conduits 2a to 2e, carbon detecting units 4a to 4i which are capable of measuring the concentration in terms of carbon of carbon-containing components in an exhaust gas and the flow rate of the exhaust gas are included. In the first embodiment, the carbon detecting units 4a to 4e are installed near outlets of exhaust gas generation sources (the thermal power station 21 and the factories 31a to 31n), respectively. In addition, the carbon detecting unit 4f is installed at a point at which outlet conduits of the factories 31a and 31b, which are exhaust gas generation sources of the area B, join. In addition, the carbon detecting unit 4g is installed near an inlet of the CO₂ recovery facility 1 (a portion through which the exhaust gases having joined flow). Note that a "first detecting unit" which acquires a concentration in terms of carbon (hereinafter, referred to as a carbon concentration) of a carbon-containing component in an exhaust gas discharged from the discharge sources and a flow rate of the exhaust gas is configured to include the carbon detecting units 4a to 4g.

The carbon detecting unit 4h shown in FIG. 1 is installed on the conduit 2d for CO₂ which flows out of the CO₂ recovery facility 1. In addition, the carbon detecting unit 4i is installed on the conduit 2e (outlet gas conduit) through which a gas other than CO₂ flows out of the CO₂ recovery facility 1. Note that a "second detecting unit" which acquires a concentration in terms of carbon of a carbon-containing component in a gas discharged from the CO₂ recovery facility 1 and a flow rate of the gas is configured to include the carbon detecting units 4h and 4i.

The carbon-containing components in the exhaust gas include CO₂, CO, CH₄, and the like. The method for measuring a carbon-containing component in an exhaust gas can be achieved by utilizing, for example, a mass analysis, a gas chromatography analysis, an infrared spectroscopy, a cavity-ring-down spectroscopy, or the like. In addition, the flow rate of the exhaust gas can be detected by using a process gas flowmeter, or the like. In addition, the concentration and the flow rate of these carbon components (CO₂, CO, CH₄) may be calculated based on a fuel use amount of the exhaust gas generation source. By acquiring the concentration in terms of carbon of the carbon-containing component in the exhaust gas, flows of not only CO₂ but also carbon-containing substances such as CO and CH₄ can be managed.

Information of the carbon detecting units 4a to 4i is collected in a data collecting system 7 (database) through a network (not shown). The computation processing device 3 of the carbon management system 100 is capable of communicating with the data collecting system 7 through the network (not shown).

The computation processing device 3 sets operating plans of the CO₂ recovery facility 1 and each discharge source by using the information of the carbon detecting units 4a to 4i collected in the data collecting system 7. That is, the computation processing device 3 has a computation processing function of setting an operating condition of at least one of the plurality of discharge sources or the CO₂ recovery facility 1, and a management function of managing at least one of the plurality of discharge sources and the CO₂ recovery facility 1, based on data acquired by the carbon detecting units 4a to 4g (the first detecting unit) and the carbon detecting units 4h and 4i (the second detecting unit).

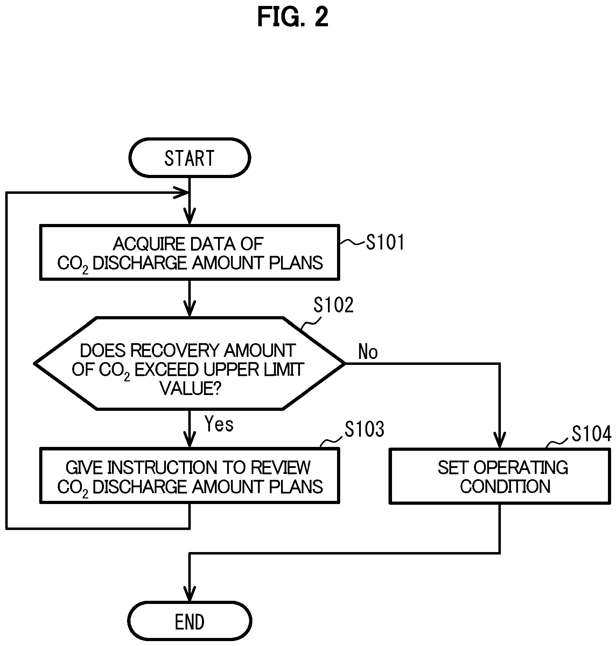

FIG. 2 is a flowchart showing processing in the carbon management system (see also FIG. 1 as appropriate).

Note that although not particularly shown in FIG. 2, it is assumed that "collection processing" of collecting the exhaust gases discharged from the plurality of discharge sources through the conduits 2a to 2c in the CO₂ recovery facility 1 and "separation processing" of separating CO₂ from the exhaust gases collected in the CO₂ recovery facility 1 are conducted.
(a) Step S101: The computation processing device 3 collects data of a CO₂ discharge amount plan from each area in a predetermined period of time. For example, the predetermined period of time is set to 1 month, and the computation processing device 3 manages CO₂ discharge amounts on a daily basis and a CO₂ recovery amount. The exhaust gas generation sources (that is, the thermal power station 21 in the area A and the factories 31a to 31n in the area B in FIG. 1) transmit data of the CO₂ discharge amount plans on a daily basis to the computation processing device 3. Then, the computation processing device 3 registers the CO₂ discharge amounts on a daily basis in the exhaust gas generation sources and the CO₂ recovery amount.

Moreover, the computation processing device 3 sets a value obtained by adding up the CO₂ discharge amount plans on a daily basis of all the exhaust gas generation sources as a planned initial value of the CO₂ recovery amount in the CO₂ recovery facility 1 in the computation processing function of setting an operating condition (operating plan) of the CO₂ recovery facility 1.

(b) Step S102: The computation processing device 3 determines whether or not the recovery amount (for example, a recovery amount per day) of CO₂ in the CO₂ recovery facility 1 exceeds a predetermined upper limit value. If the recovery amount of CO₂ does not exceed the upper limit value in step S102 (S102: No), the processing of the computation processing device 3 returns to "START". In addition, if the recovery amount of CO₂ exceeds the upper limit value in step S102 (S102: Yes), the processing of the computation processing device 3 proceeds to step S103.

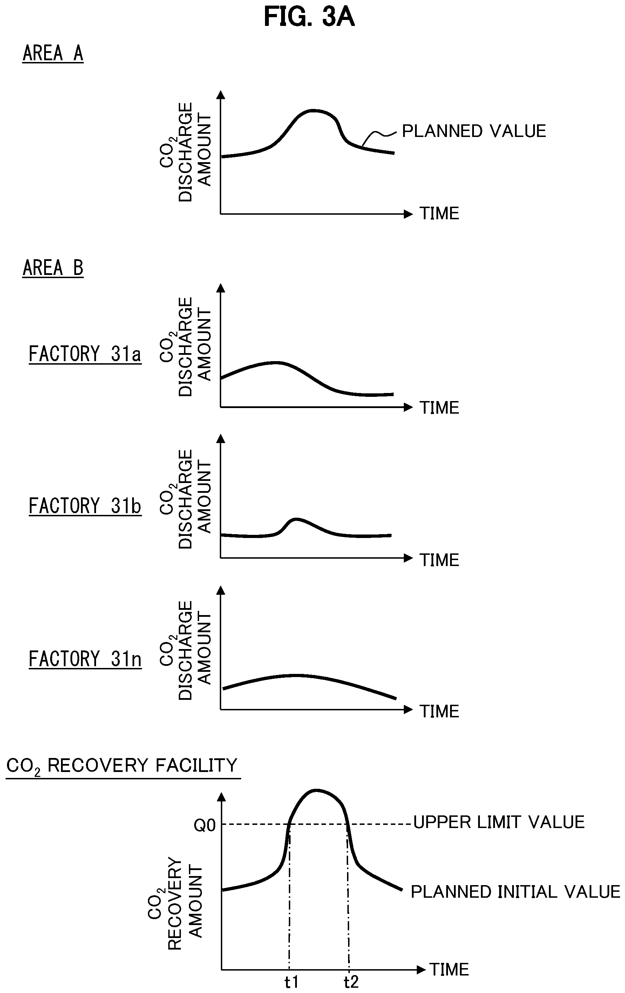

(c) Step S103: The computation processing device 3 gives an instruction to review the CO₂ discharge amount plans. For example, in the case where there is a period of time (time t1 to t2 in FIG. 3A) during which this planned initial value exceeds a designed upper limit value for a CO₂ amount which can be recovered in the CO₂ recovery facility 1, the computation processing device 3 instructs the exhaust gas generation sources to review the CO₂ discharge amount plans of the period of time (time t1 to t2) during which the CO₂ amount exceeds the upper limit value, in the management function for the discharge sources and the CO₂ recovery facility 1. That is, the computation processing device 3 transmits a predetermined instruction signal regarding the review of the CO₂ discharge amount plans to the thermal power station 21 and the factories 31a to 31n.

The thermal power station 21 and the factories 31a to 31n in each area reset the CO₂ discharge amount plans based on the instruction (S103) from the computation processing device 3, and transmit data of the CO₂ discharge amount plans after the resetting to the computation processing device 3. The computation processing device 3 acquires data of the CO₂ discharge amount plans again (S101). In this way, the CO₂ discharge amount plans after the resetting are reregistered in the computation processing device 3.

The computation processing device 3 adds up the CO₂ discharge amount plans on a daily basis of all the exhaust gas generation sources again, in the computation processing function of setting the operating condition. If the computation processing device 3 determines that the CO₂ recovery amount of the CO₂ recovery facility does not exceed the designed upper limit (upper limit value) during the predetermined period of time in the management function for the discharge sources and the CO₂ recovery facility 1 (S103: No), the computation processing device 3 determines that an operating preparation of the CO₂ recovery facility 1 is completed, and proceeds to the processing of step S104.

(d) Step S104: The computation processing device 3 sets an operating condition of the CO₂ recovery facility 1 (computation processing). The computation processing device 3 measures discharged CO₂ amounts of the carbon detecting units 4a to 4e included on the conduits 2a and 2b of the exhaust gas generation sources in the management function for the discharge sources and the CO₂ recovery facility 1, and calculates a difference from a reset planned value for each of the carbon detecting units 4a to 4e. If the computation processing device 3 determines that a detected value of the CO₂ discharge amount exceeds the replanned value, although omitted in FIG. 2, the computation processing device 3 specifies a carbon detecting unit which has caused the detected value to exceed the planned value, and notifies an exhaust gas generation source associated with the specified carbon detecting unit to further reduce the discharged CO₂ amount and of the reduction amount.

In addition, the computation processing device 3 manages the replanned value and the detected value of the CO₂ recovery amount in the CO₂ recovery facility 1. In the case where the detected value of the CO₂ amount is about to exceed the upper limit value (for example, in the case where the CO₂ amount has increased to reach a predetermined value which is smaller than the upper limit value), the computation processing device 3 specifies a carbon detecting unit which has caused the detected value to be about to exceed the planned value. Then, the computation processing device 3 notifies an exhaust gas generation source (the thermal power station 21 or the factory 31a to 31n) associated with the specified carbon detecting unit to further reduce the discharged CO₂ amount and of the reduction amount.

Note that the detected value of the CO₂ recovery amount in the computation processing function of setting the operating condition of the CO₂ recovery facility 1 is calculated from measured values of the CO₂ concentration in the exhaust gases in the carbon detecting units 4g and 4h shown in FIG. 1 and the amounts of the exhaust gases. For example, the CO₂ recovery amount can be obtained from the CO₂ recovery amount=(the amount of the exhaust gas in the carbon detecting unit 4g×the CO₂ concentration in the carbon detecting unit 4g)-(the amount of the exhaust gas in the carbon detecting unit 4i×the CO₂ concentration in the carbon detecting unit 4i), or the CO₂ recovery amount=(the amount of the exhaust gas in the carbon detecting unit 4h×the CO₂ concentration in the carbon detecting unit 4h).

The exhaust gas generation source which has been notified to reduce the CO₂ discharge amount and the reduction amount reduces the CO₂ discharge amount. The computation processing device 3 checks whether or not this exhaust gas generation source has reduced the CO₂ discharge amount from information of the carbon detecting unit. In this way, the computation processing device 3 calculates the CO₂ supply amount to be supplied from the plurality of discharge sources to the CO₂ recovery facility 1 and calculates a reduction amount of the CO₂ discharge amount to be discharged from the discharge sources such that the CO₂ supply amount to be supplied to the CO₂ recovery facility 1 falls within a designed value of the CO₂ recovery facility 1, based on the carbon concentrations and the flow rates of the exhaust gases acquired by the carbon detecting units 4a to 4g (first detecting unit).

FIG. 3A is an explanatory diagram of a CO₂ discharge amount plan in the case where the CO₂ recovery amount in a CO₂ recovery facility is predicted to temporarily exceed the upper limit.

Note that five graphs in total included in FIG. 3A indicate the transition of the CO₂ discharge amount in the thermal power station 21 in the area A, transitions of the CO₂ discharge amounts in the factories 31a, 31b, and 31n, and the transition of a predicted value of the CO₂ recovery amount in the CO₂ recovery facility 1, in this order from the top. The sum of the CO₂ discharge amounts of the thermal power station 21 and the factories 31a, 31b, and 31n at each time is the CO₂ recovery amount of the CO₂ recovery facility 1. In the example of FIG. 3A, it is predicted that the CO₂ recovery amount will exceed a predetermined upper limit value Q0 in a time zone of time t1 to t2 in the CO₂ recovery facility 1.

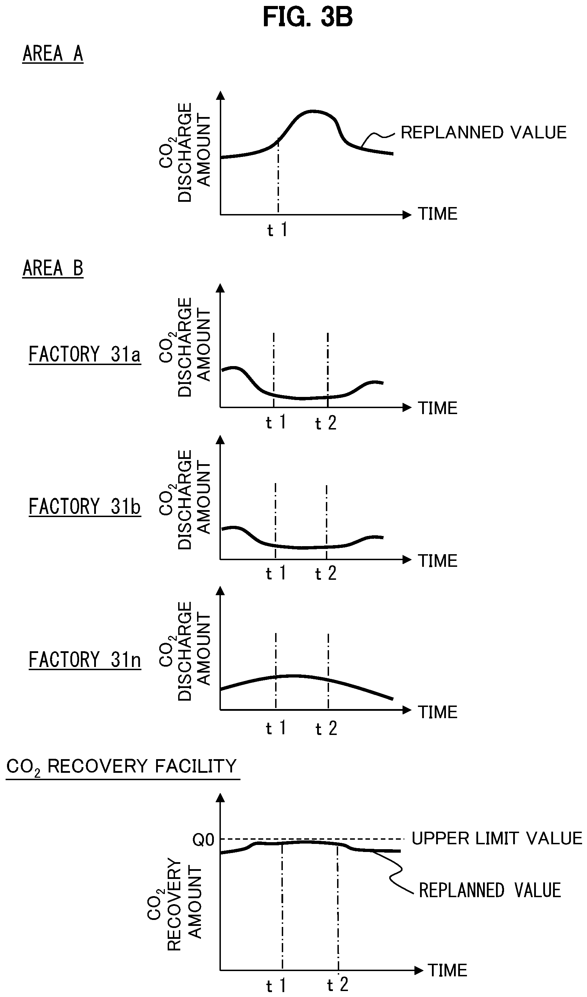

FIG. 3B is an explanatory diagram of the CO₂ discharge amount plan after the CO₂ discharge amount plan has been reviewed.

In the example of FIG. 3B, the CO₂ discharge amount plans are reviewed in the factories 31a and 31b, so that the CO₂ discharge amount in the time zone including time t1 to t2 is reduced, based on the instruction (S103 in FIG. 2) from the computation processing device 3. This makes the CO₂ recovery amount (replanned value) in the CO₂ recovery facility 1 equal to or lower than the predetermined upper limit value Q0.

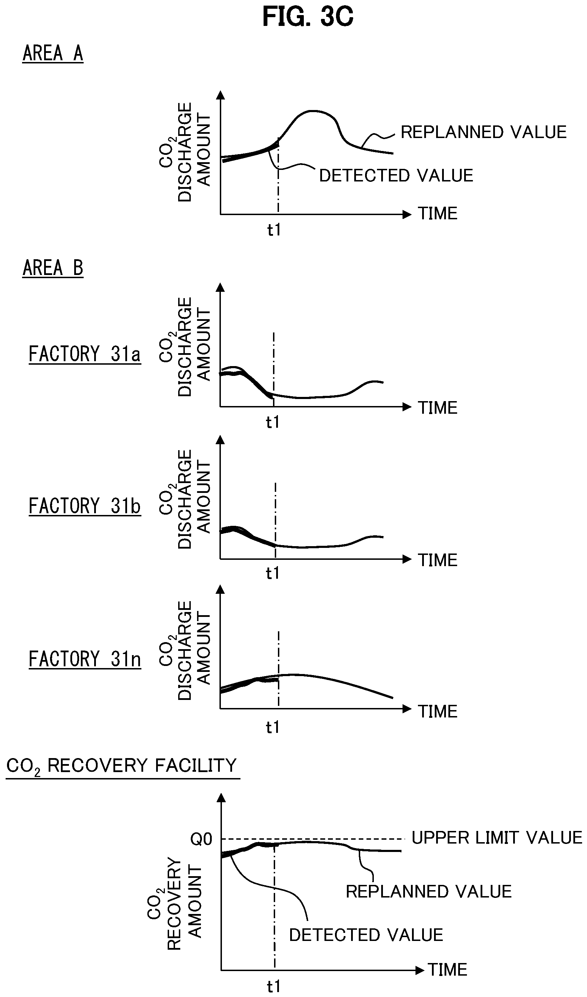

FIG. 3C is an explanatory diagram regarding actual CO₂ discharge amounts.

Note that the heavy lines in each graph of FIG. 3 indicates the detected values of the CO₂ discharge amounts and the CO₂ recovery amount.

If the computation processing device 3 has determined that the detected value of the CO₂ discharge amount exceeded the replanned value in each discharge source, the computation processing device 3 notifies the discharge source to further reduce the CO₂ discharge amount and of the reduction amount as described above.

As described above, the carbon management system 100 according to the first embodiment includes the computation processing device 3 which communicates with the CO₂ recovery facility 1 which collects exhaust gases discharged from the plurality of discharge sources through the conduits 2a to 2g and separates CO₂ from the collected exhaust gases. The computation processing device 3 sets an operating condition of at least one of the plurality of discharge sources or an operating condition of the CO₂ recovery facility. With such a configuration, the computation processing device 3 can determine whether or not the CO₂ discharge amount from each discharge source should be adjusted based on the designed upper limit value of the CO₂ recovery facility 1 and the CO₂ discharge plans of the discharge sources and instruct the discharge source to reduce the CO₂ discharge amount.

In addition, if CO₂ reduction technologies were introduced individually, the burden of costs would increase. However, in the first embodiment, since exhaust gases are collected in an industrial park or the like and collectively recovered, it becomes possible to disperse the burden of costs associated with the introduction of CO₂ reduction technologies. Then, by making the CO₂ supply amounts of the CO₂ recovery facility 1, the recycling facility, and the like fall within a design range, and adjusting the supply and demand, it is possible to reduce the operating load and secure the purity of products and the supply/demand balance. In this way, the first embodiment makes it possible to provide a carbon management system 100 which can adjust the supply/demand balance of CO₂ or a carbon-containing substance. Note that the "carbon-containing substance" includes CO₂ as well.

### <<Second Embodiment>>

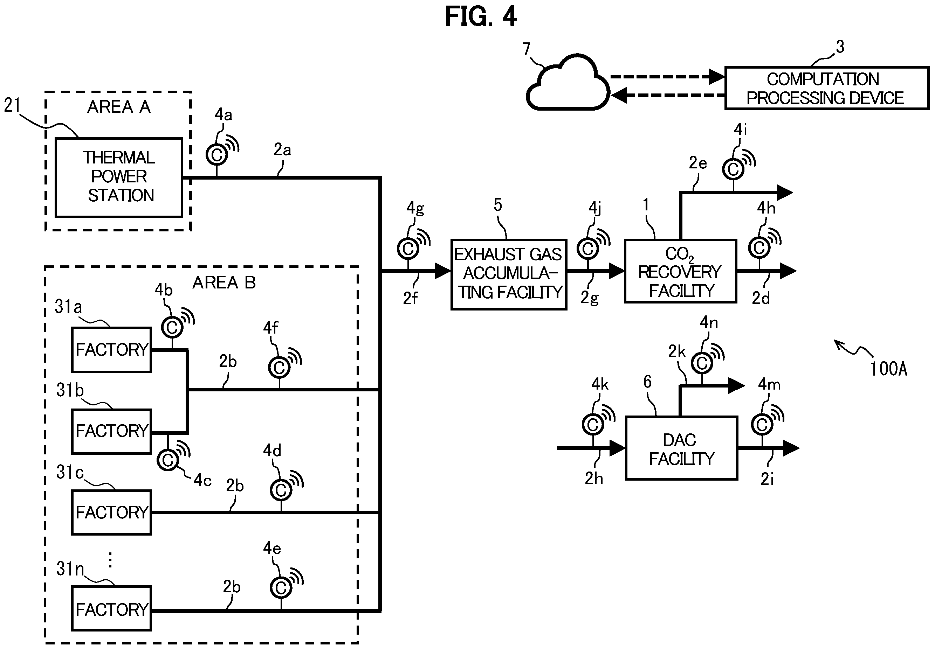

A second embodiment is different from the first embodiment in that an exhaust gas accumulating facility (see FIG. 4) is provided between a plurality of discharge sources and a CO₂ recovery facility 1 (see FIG. 4). In addition, the second embodiment is different from the first embodiment in that a DAC facility 6 (see FIG. 4) is provided. Note that the other configurations are the same as in the first embodiment. Hence, portions different from the first embodiment will be described, and repetitive descriptions of the same portions will be omitted.

FIG. 4 is a configuration diagram of a carbon management system 100A according to the second embodiment.

In the second embodiment, a method for controlling a CO₂ supply amount such that the CO₂ recovery amount of the CO₂ recovery facility 1 can be made equal to or lower than the upper limit value without particularly changing the CO₂ discharge amount plans of exhaust gas generation sources in the case where each exhaust gas generation source as described in the first embodiment cannot flexibly change the CO₂ discharge amount plan will be described.

The carbon management system 100A shown in FIG. 4 includes an exhaust gas accumulating facility 5 (exhaust gas storing unit) provided between discharge sources which discharge CO₂ and the CO₂ recovery facility 1 and further includes a DAC(Direct Air Capture) facility 6 provided at any desired location in addition to the same configurations as those of the first embodiment. Note that forms of connections of conduits connecting each facility such as the discharge sources, the CO₂ recovery facility 1, and the carbon detecting units 4a to 4i are the same as in the first embodiment.

The exhaust gas accumulating facility 5 has a function of accumulating exhaust gases from discharge sources such as the thermal power station 21 and the factories 31a to 31n. A predetermined upper limit value is set for an exhaust gas accumulated amount in the exhaust gas accumulating facility 5, and the exhaust gas accumulated amount is managed so as not to exceed the upper limit value. For example, the amount of exhaust gas present in the exhaust gas accumulating facility 5 is calculated from the pressure inside the exhaust gas accumulating facility 5 and relations between the supply amount and the release amount of the exhaust gas in the exhaust gas accumulating facility 5. As shown in FIG. 4, the exhaust gas accumulating facility 5 is connected to a conduit 2f at which exhaust gases from the respective discharge sources of CO₂ join. Then, the exhaust gas accumulated in the exhaust gas accumulating facility 5 is guided to the CO₂ recovery facility 1 through a conduit 2g. Note that the exhaust gas accumulating facility may be individually installed downstream of each discharge source, and the installation locations and the number of exhaust gas accumulating facilities installed are not limited. In addition, the conduit itself which connects the discharge sources and the CO₂ recovery facility 1 may be regarded as the exhaust gas accumulating facility, and the form of installation is not particularly limited.

The DAC facility 6 has a function of recovering CO₂ in the atmosphere. The recovery method of the DAC facility 6 may be the same as that of the CO₂ recovery facility 1. That is, the method for recovering the CO₂ includes a chemical absorption method which brings an alkaline CO₂ absorption liquid and an exhaust gas into contact to cause the CO₂ absorption liquid to absorb CO₂ in the exhaust gas, a physical adsorption method which uses an adsorption agent utilizing a Van der Waals' force, a chemical adsorption method which brings an alkaline CO₂ adsorption material (solid) and an exhaust gas into contact to cause the CO₂ adsorption material to adsorb CO₂ in the exhaust gas, and the like. Note that a conduit 2h on the inlet side of the DAC facility 6 may be connected to, for example, any of the conduits 2a to 2g or may be connected to another predetermined portion.

As shown in FIG. 4, the carbon management system 100A further includes carbon detecting units 4j to 4n which are capable of measuring the concentration in terms of carbon of carbon-containing components in an exhaust gas and the flow rate of the exhaust gas in addition to the carbon detecting units 4a to 4i described in the first embodiment. The carbon detecting unit 4j is installed on the conduit 2g on the outlet side of the exhaust gas accumulating facility 5. In addition, the carbon detecting unit 4k is installed on the conduit 2h on the inlet side of the DAC facility 6. The carbon detecting unit 4m is installed on a conduit 2i which guides recovered CO₂ flowing out of the DAC facility 6. The carbon detecting unit 4n is installed on a conduit 2k (outlet gas conduit) which guides a gas other than the recovered CO₂ flowing out of the DAC facility 6.

Data detected by these carbon detecting units 4a to 4n is collected to the data collecting system 7 which is connected to the computation processing device 3 like the first embodiment.

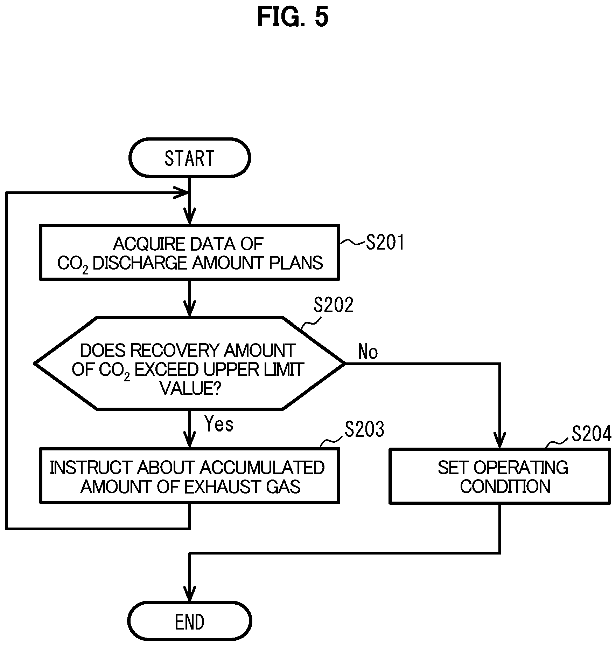

FIG. 5 is a flowchart showing processing in the carbon management system (see also FIG. 4 as appropriate).

Note that steps S201, S202, and S204 of FIG. 5 are the same as steps S101, S102, and S104 of the first embodiment (see FIG. 2) in this order.
(a) Step S201: The computation processing device 3 collects a CO₂ discharge amount plan from each area in a predetermined period of time. For example, the predetermined period of time is set to 1 month, and the computation processing device 3 manages the CO₂ discharge amounts on a daily basis and the CO₂ recovery amount. The exhaust gas generation sources (that is, the thermal power station 21 in the area A and the factories 31a to 31n in the area B in FIG. 4) transmit data of the CO₂ discharge amount plans on a daily basis to the computation processing device 3. Then, the computation processing device 3 registers the CO₂ discharge amounts on a daily basis in the exhaust gas generation sources and the CO₂ recovery amount.

Moreover, the computation processing device 3 sets a value obtained by adding up the CO₂ discharge amount plans on a daily basis of all the exhaust gas generation sources as a planned initial value of the CO₂ recovery amount in the CO₂ recovery facility 1 in the computation processing function of setting operating conditions (operating plans) of the exhaust gas accumulating facility 5 and the like.

(b) Step S202: The computation processing device 3 determines whether or not the recovery amount (for example , a recovery amount per day) of CO₂ in the CO₂ recovery facility 1 exceeds a predetermined upper limit value. If the recovery amount of CO₂ does not exceed the upper limit value in step S202 (S202: No), the processing of the computation processing device 3 returns to "START". In addition, if the recovery amount of CO₂ exceeds the upper limit value in step S202 (S202: Yes), the processing of the computation processing device 3 proceeds to step S203.

(c): step S203: The computation processing device 3 instructs the exhaust gas accumulating facility 5 about an accumulated amount of the exhaust gas. If there is a period of time (time t1 to t2 in FIG. 4) during which the planned initial value of the CO₂ recovery facility 1 exceeds an upper limit value for a CO₂ amount which can be recovered in the CO₂ recovery facility 1 in the management function for the exhaust gas accumulating facility 5 (S202: Yes), the computation processing device 3 instructs the exhaust gas accumulating facility 5 to accumulate the exhaust gas such that the planned initial value falls within the upper limit value (S203). Specifically, the computation processing device 3 transmits a predetermined instruction signal which requests review of the accumulated amount of CO₂ to the exhaust gas accumulating facility 5.

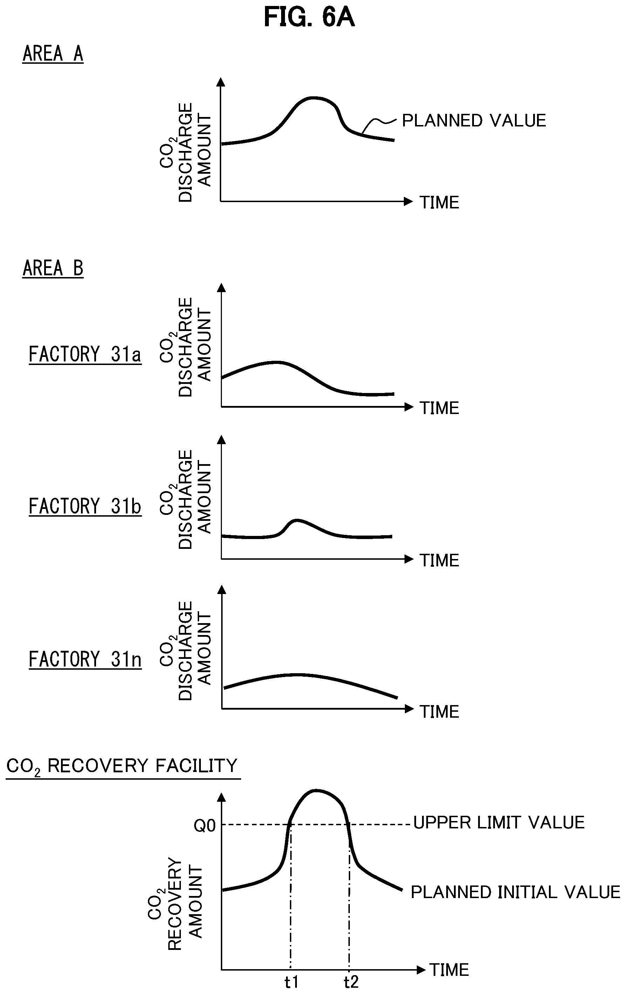

(d) Then, although omitted in FIG. 5, the computation processing device 3 acquires actual values of CO₂ discharge amounts of the discharge sources of each area from the carbon detecting units 4a to 4n, and supplies the exhaust gas to the exhaust gas accumulating facility 5 in accordance with the operating condition of the exhaust gas accumulating facility 5. At this time, in the case where an increase or decrease from the plans in terms of the amounts of exhaust gases of the discharge sources is found from data from the carbon detecting units 4b, 4c, 4d, and 4e, the computation processing device 3 changes the operating plan of the exhaust gas accumulating facility 5 as appropriate depending on the increase or decrease. Note that in a time zone (t<t1, t>t2 in FIG. 6A) in which the planned initial value of the CO₂ recovery facility 1 is equal to or less than the designed upper limit, the exhaust gas accumulated in the exhaust gas accumulating facility 5 may be supplied to an extent that does not exceed the designed upper limit value of the CO₂ recovery facility 1.

Since an exhaust gas is larger in volume than CO₂ to be recovered, there is a case where it is difficult to install the exhaust gas accumulating facility 5 depending on the scale of discharge sources. In view of this, the method for using the DAC facility 6 will be described below. Note that this method is omitted in the flowchart of FIG. 5.

If the CO₂ recovery amount of the CO₂ recovery facility 1 exceeds the designed upper limit value at the time of planning in step S202, the computation processing device 3 instructs the DAC facility 6 to recover CO₂ in an amount corresponding to the excess from the designed upper limit value in a time zone during which the amount exceeds the upper limit value. Although the DAC facility 6 recovers CO₂ in accordance with the plan, if the amount of exhaust gases from the discharge sources is larger than the plan, the operating condition of the DAC facility 6 is changed as appropriate. Note that regarding this time zone (t1 to t2 in FIG. 6A), the exhaust gas in an amount equal to or more than the designed value may be released to the atmosphere without being supplied to the CO₂ recovery facility 1, for example. In addition, since there is a case where a CO₂ accumulating facility or a CO₂ recycling facility, for example, is included downstream of the CO₂ recovery facility 1 or the DAC facility 6, the operation of the downstream facilities can be made easier by making the CO₂ recovery amount constant as much as possible. For this reason, the operating time of the DAC facility 6 is preferably set out of the time zone (t1 to t2) of FIG. 6A described next.

FIG. 6A is an explanatory diagram of a CO₂ discharge amount plan in the case where the CO₂ recovery amount in a CO₂ recovery facility is predicted to temporarily exceed the upper limit. Note that FIG. 6A is similar to FIG. 3A used in the description of the first embodiment, and it is predicted that the CO₂ recovery amount will exceed the predetermined upper limit value Q0 in a time zone of time t1 to t2 in the CO₂ recovery facility 1. In such a case, the computation processing device 3 transmits a predetermined instruction signal to the exhaust gas accumulating facility 5 such that the CO₂ recovery amount at each time is made to be equal to or lower than the upper limit value Q0.

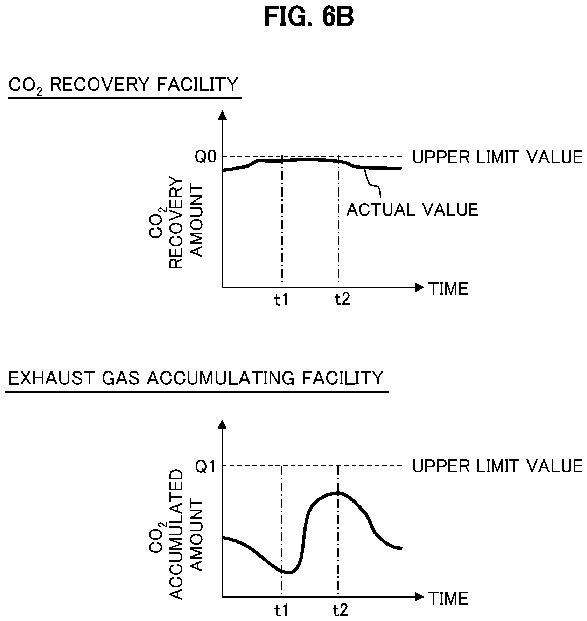

FIG. 6B is an explanatory diagram after the CO₂ accumulated amount has been reviewed.

As shown in FIG. 6B, the CO₂ recovery amount in the CO₂ recovery facility 1 is made to be equal to or lower than the upper limit value Q0 and transitions near the upper limit value Q0 by adjusting the CO₂ accumulated amount at each time in the exhaust gas accumulating facility 5. Note that the thermal power station 21 in the area A and the factories 31a to 31n in the area B can be operated without particularly changing the initial CO₂ discharge amount plans (see FIG. 6A).

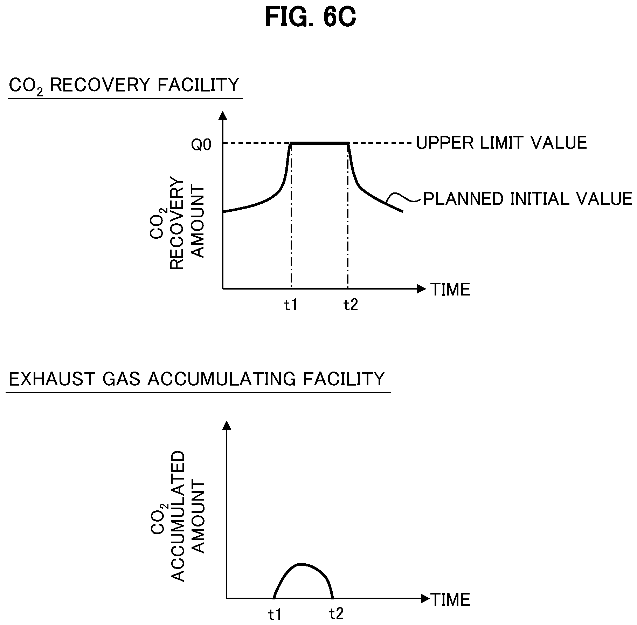

FIG. 6C is an explanatory diagram showing another example after the CO₂ accumulated amount has been reviewed.

In the example of FIG. 6C, in the time zone t1 to t2 during which the CO₂ recovery amount in the CO₂ recovery facility 1 exceeds the predetermined upper limit value Q0 in accordance with the initial CO₂ discharge amount plan (see FIG. 6A), an amount of exhaust gas corresponding to this excess is accumulated in the exhaust gas accumulating facility 5. With such processing as well, the CO₂ recovery amount in the CO₂ recovery facility 1 can be made to be equal to or lower than the upper limit value Q0.

Note that the detected value of the CO₂ accumulated amount in the computation processing function of setting the operating condition of the exhaust gas accumulating facility 5 is calculated from measured values of the CO₂ concentrations in the gases and the gas amounts of the carbon detecting units 4g and 4j of FIG. 4. For example, the CO₂ accumulated amount of the exhaust gas accumulating facility 5 can be obtained in accordance with the CO₂ accumulated amount=(the gas amount in the carbon detecting unit 4g×the CO₂ concentration in the carbon detecting unit 4g)-(the gas amount in the carbon detecting unit 4j×the CO₂ concentration in the carbon detecting unit 4j). Note that the CO₂ accumulated amount of the exhaust gas accumulating facility 5 can be calculated by a method that does not use a carbon detecting unit, for example, based on a detected value of a manometer (not shown) provided in the exhaust gas accumulating facility 5.

The computation processing device 3 calculates a CO₂ supply amount from the plurality of discharge sources to the CO₂ recovery facility 1 based on the carbon concentrations and the flow rates of the exhaust gases acquired by the carbon detecting units 4a to 4g (first detecting unit). Then, in the case where the CO₂ recovery amount exceeds the designed value (upper limit value) of the CO₂ recovery facility 1, the computation processing device 3 causes the exhaust gas accumulating facility 5 (exhaust gas storing unit) to temporarily store the exhaust gas in an amount corresponding to this excess of the designed value. Thereafter, in the case where the CO₂ supply amount has become equal to or lower than the designed value of the CO₂ recovery facility 1, the computation processing device 3 sets the operating condition of the exhaust gas accumulating facility 5 such that the exhaust gas is supplied from the exhaust gas accumulating facility 5 to the CO₂ recovery facility 1 to an extent that the amount does not exceed the designed value of the CO₂ recovery facility 1.

In addition, the detected value of the CO₂ recovery amount in the computation processing function of setting the operating condition of the DAC facility 6 is calculated from the measured values of the CO₂ concentrations in the gases and the gas amounts of the carbon detecting units 4k, 4m, and 4n of FIG. 4. For example, the detected value of the CO₂ recovery amount can be obtained in accordance with the CO₂ recovery amount=(the gas amount in the carbon detecting unit 4k×the CO₂ concentration in the carbon detecting unit 4k)-(the gas amount in the carbon detecting unit 4n×the CO₂ concentration in the carbon detecting unit 4n),or the CO₂ recovery amount=(the gas amount in the carbon detecting unit 4m×the CO₂ concentration in the carbon detecting unit 4m).

The computation processing device 3 calculates the CO₂ supply amount from the plurality of discharge sources to the CO₂ recovery facility 1 based on the carbon concentrations and the flow rates of the exhaust gases acquired by the carbon detecting units 4a to 4g (first detecting unit). Then, in the case where the CO₂ supply amount exceeds the designed value (the upper limit value) of the CO₂ recovery facility 1, the computation processing device 3 supplies the exhaust gas only in an amount equal to the designed value of the CO₂ recovery facility 1 from the plurality of discharge sources to the CO₂ recovery facility 1. Moreover, the computation processing device 3 calculates an excess CO₂ amount by which the CO₂ supply amount exceeds the designed value of the CO₂ recovery facility 1 from the CO₂ supply amount and the designed value, and sets the operating condition of the DAC facility 6 such that the excess CO₂ amount is recovered.

In the second embodiment, although the control method in the case where the discharge source of each area cannot flexibly change the CO₂ discharge amount plan, the configuration is not limited to this. For example, the second embodiment can be applied also in the case where the discharge source of each area can change the CO₂ discharge amount plan as in the first embodiment, and the conditions are not limited.

The above-described configuration makes it possible to make the CO₂ recovery amount equal to or lower than the designed upper limit value of the CO₂ recovery facility 1 even in the case where the exhaust gas is supplied to the CO₂ recovery facility 1 without changing the CO₂ discharge amount plan of the discharge source in each area.

### <<Third Embodiment>>

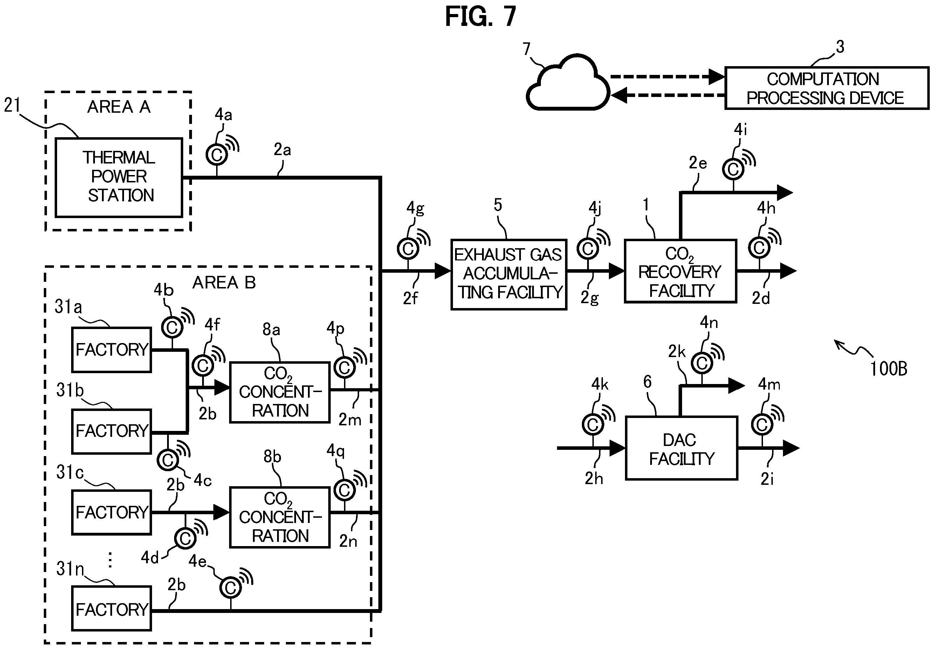

A third embodiment is different from the second embodiment in that CO₂ concentrating facilities 8a and 8b (a CO₂ concentration adjusting facility: see FIG. 7) are provided between a plurality of discharge sources and an exhaust gas accumulating facility 5 (see FIG. 7). Note that the other configurations are the same as in the second embodiment. Hence, portions different from the second embodiment will be described, and repetitive descriptions of the same portions will be omitted.

FIG. 7 is a configuration diagram of a carbon management system 100B according to the third embodiment.

The CO₂ recovery facility 1 (see FIG. 7) is designed on the assumption of the CO₂ concentration of a gas supplied from an inlet in general, and if the CO₂ concentration in a supplied gas falls below the assumed CO₂ concentration, there is a possibility that the consumed energy in separating CO₂ in the CO₂ recovery facility 1 increases or the concentration of CO₂ recovered at the outlet decreases. In addition, if the amount of an exhaust gas from a discharge source is large, the conduit connecting the discharge source in each area and the CO₂ recovery facility 1 or the exhaust gas accumulating facility 5 needs to be designed to be large in conformity with the amount. From the above, it is desirable to increase the CO₂ concentration of an exhaust gas before being supplied to a conduit in the case where the CO₂ concentration of the exhaust gas discharged from a discharge source falls below the designed value of the CO₂ recovery facility 1 in particular for reducing the operating load of the CO₂ recovery facility 1 or reducing the initial cost of the conduit. In the third embodiment, a method for solving such problems will be described.

FIG. 7 shows that the third embodiment further includes CO₂ concentrating facilities 8a and 8b (CO₂ concentration adjusting facility) provided between each discharge source in the area B and the exhaust gas accumulating facility 5 in addition to the system configuration (see FIG. 4) of the second embodiment. Note that the configurations of the elements other than the CO₂ concentrating facilities 8a and 8b and the connection forms are the same as in the second embodiment. In addition, the method for controlling the amount of CO₂ to be supplied to the CO₂ recovery facility 1 such that the amount becomes equal to or lower than the designed upper limit value of the CO₂ recovery facility 1 is also the same as in the second embodiment, and the description will be omitted.

The CO₂ concentrating facilities 8a and 8b are facilities which adjusts the CO₂ concentration of the exhaust gas discharged from at least one of the plurality of discharge sources (the factory 31a, 31b, or 31c in the example of FIG. 7), and are provided between the plurality of discharge sources and the CO₂ recovery facility 1. These CO₂ concentrating facilities 8a and 8b have a function of increasing the CO₂ concentration in the exhaust gases. For example, such a function includes a method for improving the CO₂ concentration by separating CO₂ with a CO₂ separation membrane and adding the CO₂ to an exhaust gas of another discharge source besides a N₂ separation membrane for separating N₂ which is an exhaust gas component other than CO₂ and the method for recovering CO₂ in the CO₂ recovery facility 1 described in the first embodiment. In addition, for example, the CO₂ concentration may be adjusted by separating CO₂ with a CO₂ separation membrane, and providing a conduit (not shown) which bypasses one CO₂ concentrating facility to join a concentrated CO₂ gas and the exhaust gas flowing through the bypass, besides the method for recovering CO₂ in the CO₂ recovery facility 1 described in the first embodiment.

The CO₂ concentrating facilities 8a and 8b may be installed downstream of each discharge source, or may be installed in a location where the exhaust gases of the plurality of discharge sources join, and the installation locations are not limited. In addition, the CO₂ concentrating facilities may be installed for all the discharge sources, or may be installed only for a discharge source which is constantly discharging an exhaust gas with a concentration equal to or lower than the designed CO₂ concentration of the CO₂ recovery facility 1, for example. The number and locations of the CO₂ concentrating facilities installed are not limited.

As shown in FIG. 7, a carbon detecting unit 4p is installed on a conduit 2m downstream of the CO₂ concentrating facility 8a, and a carbon detecting unit 4q is installed on a conduit 2n downstream of the CO₂ concentrating facility 8b. The carbon detecting units 4p and 4q have functions of measuring the concentration in terms of carbon of carbon-containing components in the gas and the flow rate of the exhaust gas. Data detected by these carbon detecting units 4p and 4q is collected in a data collecting system 7 connected to the computation processing device 3 as in the first embodiment and the second embodiment.

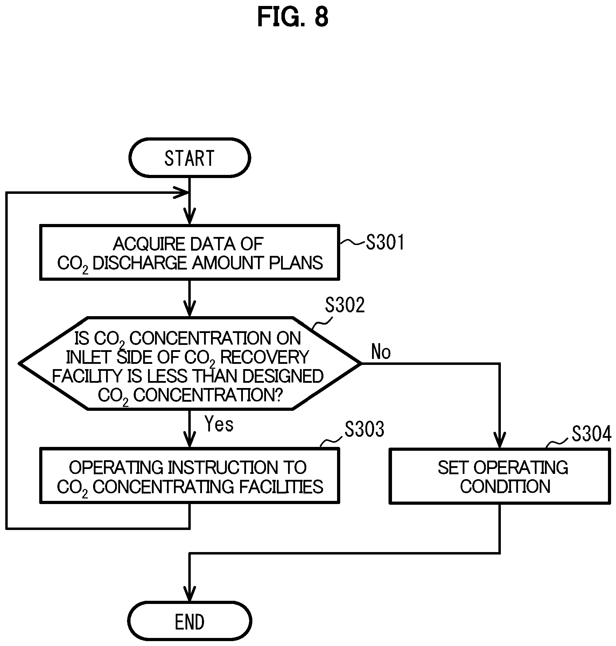

FIG. 8 is a flowchart showing processing in the carbon management system (see also FIG. 7 as appropriate).

Note that steps S301 and S304 of FIG. 8 are the same as steps S101 and S104 of the first embodiment (see FIG. 2) in this order.

(a) Step S301: The computation processing device 3 collects a CO₂ discharge amount plan (exhaust gas flow rate plan) from each area in a predetermined period of time, and predicts the CO₂ recovery amount and the CO₂ concentration of the CO₂ recovery facility 1. For example, the predetermined period of time is set to 1 month, and the computation processing device 3 manages the CO₂ discharge amounts on a daily basis, the CO₂ recovery amount, and the CO₂ concentration, The exhaust gas generation sources (that is, the thermal power station 21 in the area A and the factories 31a to 31n in the area B in FIG. 7) transmit data of the CO₂ discharge amount plans on a daily basis and the exhaust gas flow rate plans to the computation processing device 3. Then, the computation processing device 3 registers the CO₂ discharge amount plans on a daily basis and the exhaust gas flow rate plans.

In addition, the computation processing device 3 sets a CO₂ concentration in an inlet of the CO₂ recovery facility 1 as a planned initial value based on the CO₂ recovery amount and the flow rate of the exhaust gas collected from each exhaust gas generation source in the CO₂ recovery facility 1 in a computation processing function of setting operating conditions of the CO₂ concentrating facilities 8a and 8b.

(b) Step S302: The computation processing device 3 determines whether or not the CO₂ concentration on the inlet side of the CO₂ recovery facility 1 is less than a designed CO₂ concentration. If the CO₂ concentration on the inlet side of the CO₂ recovery facility 1 is equal to or more than the designed CO₂ concentration (S302: No), the processing of the computation processing device 3 proceeds to step S304. In step S304, the computation processing device 3 sets an operating condition of each facility to a predetermined condition. In addition, if the CO₂ concentration on the inlet side of the CO₂ recovery facility 1 is less than the designed CO₂ concentration in the management function for the CO₂ concentrating facilities 8a and 8b (S302: Yes), the processing of the computation processing device 3 proceeds to step S303.

(c) Step S303: The computation processing device 3 transmits a predetermined operating instruction to the CO₂ concentrating facilities 8a and 8b. That is, the computation processing device 3 transmits the operating instruction to the CO₂ concentrating facilities 8a and 8b such that the CO₂ concentration exceeds the designed CO₂ concentration of the CO₂ recovery facility 1. At this time, the CO₂ concentration only has to be equal to or more than the designed CO₂ concentration on the inlet side of the CO₂ recovery facility 1, and the CO₂ concentration does not particularly need to be equal to or more than the designed CO₂ concentration on the outlet side of all the CO₂ concentrating facilities 8a and 8b. In addition, like the second embodiment, the DAC facility 6 may be notified of a predetermined operating condition based on each management function of the computation processing device 3 in addition to the exhaust gas generation sources and the exhaust gas accumulating facility 5 such that the CO₂ recovery amount in the CO₂ recovery facility 1 does not exceed the designed upper limit value along with the above-described operating instruction.

Then, although omitted in FIG. 8, the computation processing device 3 acquires actual values of the flow rates of CO₂ and the CO₂ concentrations of the CO₂ concentrating facilities 8a and 8b and the CO₂ recovery facility 1 in addition to the exhaust gas generation source of each area from the carbon detecting units 4a to 4q, and operates each facility in accordance with the operating condition of the CO₂ concentrating facility. At this time, in the case where an increase or decrease in the actual values of the exhaust gas amount and the CO₂ concentration from the discharge sources relative to the planned values is found from data from the carbon detecting units 4b, 4c, 4d, and 4e, the computation processing device 3 changes the operating conditions of the CO₂ concentrating facilities 8a and 8b as appropriate such that the CO₂ concentration on the inlet side of the CO₂ recovery facility 1 becomes equal to or more than the designed value (designed CO₂ concentration) depending on the increase or decrease.

In this way, the computation processing device 3 sets the operating conditions of the CO₂ concentrating facilities 8a and 8b (CO₂ concentration adjusting facility) such that the carbon concentration in the exhaust gas to be supplied to the CO₂ recovery facility 1 falls within a set numerical range based on the carbon concentrations acquired by the carbon detecting units 4a to 4g (first detecting unit).

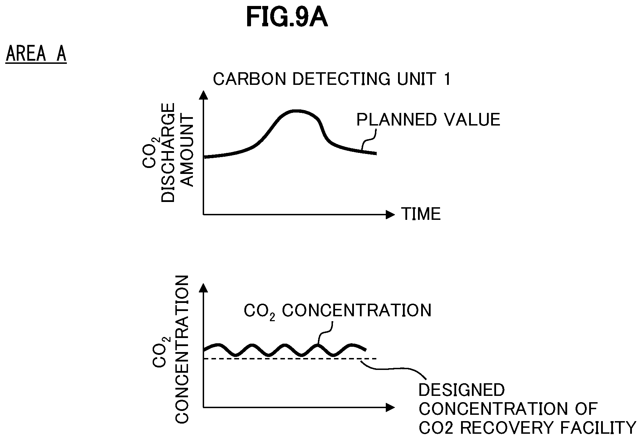

FIG. 9A is an explanatory diagram showing transitions of the predicted values of the CO₂ discharge amount and the CO₂ concentration of the thermal power station in the area A.

In the example of FIG. 9A, it is predicted that after the CO₂ discharge amount of the thermal power station 21 (see FIG. 7) in the area A increases, the CO₂ discharge amount will turn to decrease. In addition, it is predicted that the concentration of CO₂ discharged from the thermal power station 21 (see FIG. 7) will exceed the designed concentration of the CO₂ recovery facility 1.

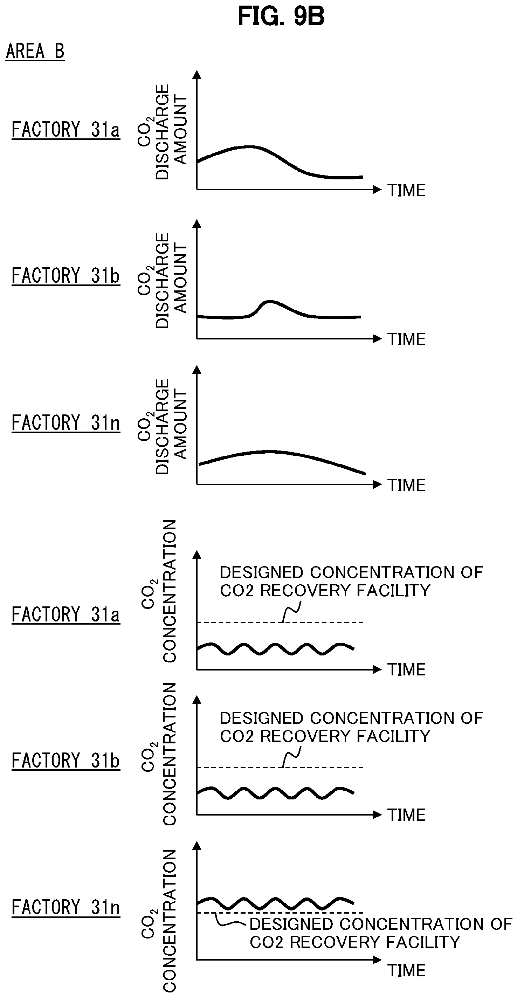

FIG. 9B is an explanatory diagram showing transitions of predicted values of the CO₂ discharge amounts and the CO₂ concentrations of the factories 31a, 31b, and 31n in the area B.

As shown in FIG. 9B, it is predicted that the CO₂ discharge amounts of the factories 31a, 31b, and 31c (see FIG. 7) in the area B will increase and decrease to a certain extent. In addition, although the concentration of CO₂ discharged from the factory 31n exceeds the designed concentration of the CO₂ recovery facility 1, it is predicted that the concentrations of CO₂ discharged from the factories 31a and 31b will greatly fall below the designed concentration of the CO₂ recovery facility 1.

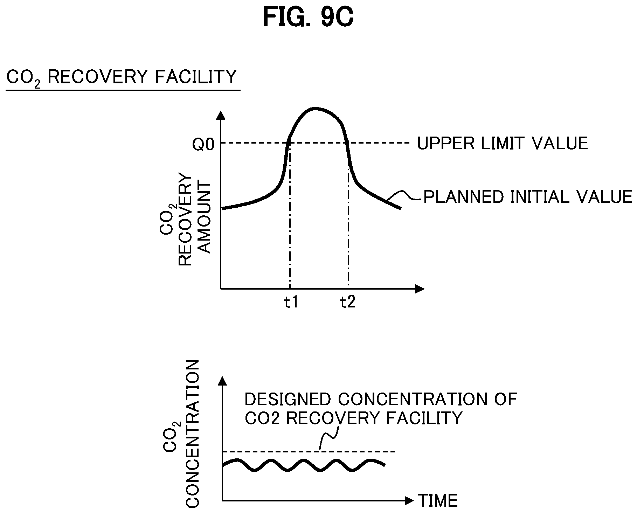

FIG. 9C is an explanatory diagram showing transitions of the CO₂ recovery amount and the CO₂ concentration in the CO₂ recovery facility.

In the example of FIG. 9C, it is predicted that the CO₂ recovery amount in the CO₂ recovery facility 1 will exceed a predetermined upper limit value Q0 in a time zone of time t1 to t2. In addition, it is predicted that the CO₂ concentration in the CO₂ recovery facility 1 will fall below a predetermined designed concentration.

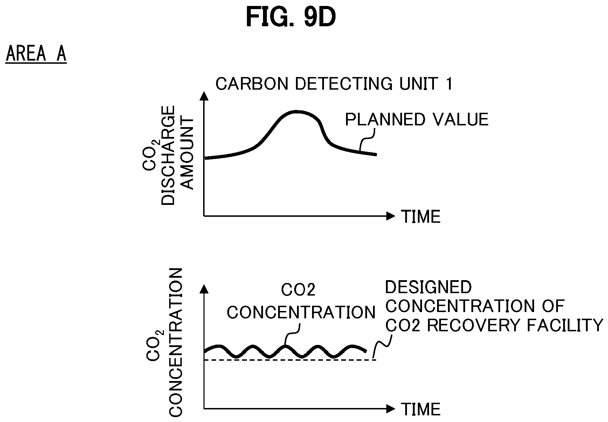

FIG. 9D is an explanatory diagram showing transitions of predicted values of the CO₂ discharge amount and the CO₂ concentration of the thermal power station in the area A in the case where the CO₂ concentrating facility is operated.

Regarding the thermal power station 21 (see FIG. 7) in the area A, since the CO₂ concentration has exceeded the designed concentration of the CO₂ recovery facility 1 in the first place, the CO₂ discharge amount plan is not particularly changed.

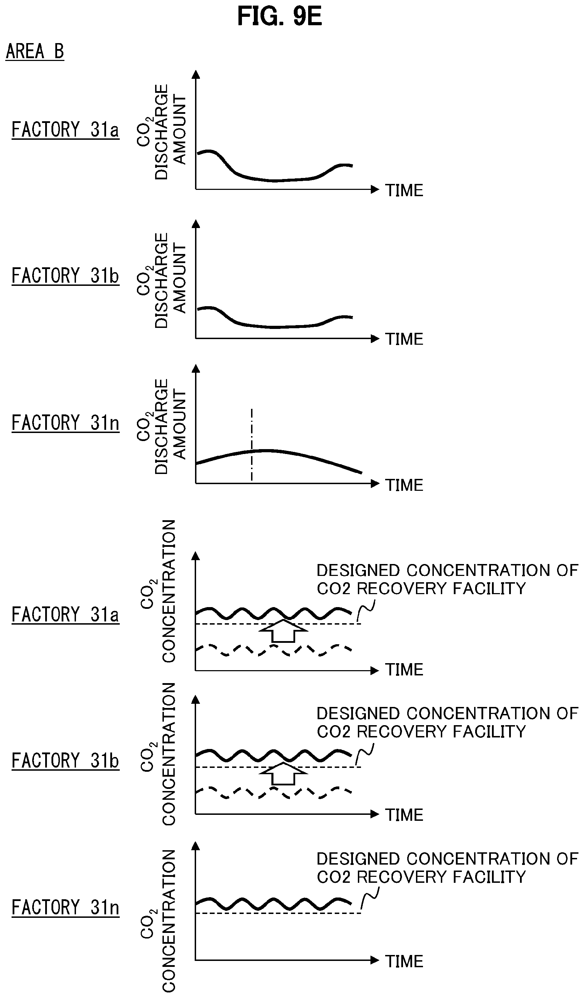

FIG. 9E is an explanatory diagram showing transitions of predicted values of the CO₂ discharge amounts and the CO₂ concentrations of the factories 31a, 31b, and 31n in the area B in the case where the CO₂ concentrating facility is operated.

In the example of FIG. 9E, the CO₂ discharge amounts are reviewed in the factories 31a and 31b such that the CO₂ recovery amount in the CO₂ recovery facility 1 is made equal to or lower than the upper limit value Q0 in a time zone including time t1 to t2 (see FIG. 9C). In addition, since the CO₂ concentrating facilities 8a and 8b(see FIG. 7) are operated in a predetermined manner, it is predicted that the concentration of CO₂ discharged from the factories 31a and 31b besides the factory 31n will exceed the designed concentration of the CO₂ recovery facility.

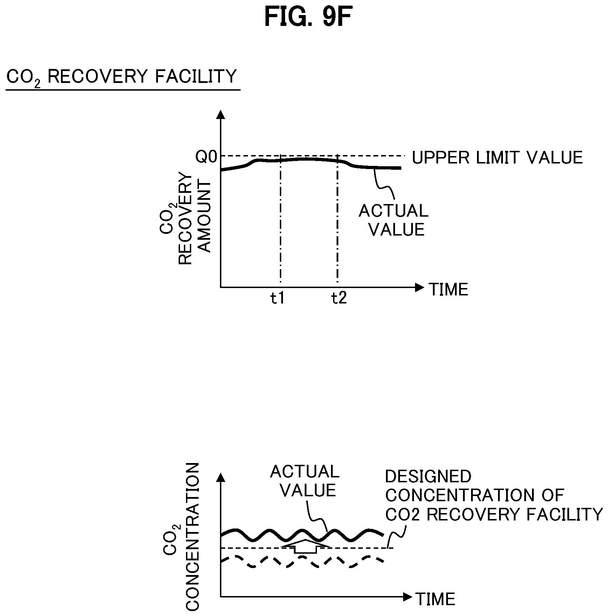

FIG. 9F is an explanatory diagram showing actual values of the CO₂ recovery amount and the CO₂ concentration in the CO₂ recovery facility.

Note that the heavy solid line in the graph on the upper side of FIG. 9F indicates the transition of the actual value of the CO₂ recovery amount in the CO₂ recovery facility 1. In addition, the heavy solid line in the graph on the lower side of FIG. 9F indicates the transition of the actual value of the concentration of CO₂ discharged from the CO₂ recovery facility 1. As shown in FIG. 9F, the actual value of the CO₂ recovery amount in the CO₂ recovery facility 1 is made equal to or lower than the predetermined upper limit value Q0. In addition, the actual value of the concentration of CO₂ discharged from the CO₂ recovery facility 1 exceeds the designed concentration of the CO₂ recovery facility 1. This makes it possible to recover CO₂ efficiently within the ability of the CO₂ recovery facility 1.

The description will be continued referring back to FIG. 7 again. The computation processing device 3 measures and manages the CO₂ concentrations in the carbon detecting units 4p and 4q installed on the outlet side of the CO₂ concentrating facilities 8a and 8b, and changes the operating conditions of the CO₂ concentrating facilities 8a and 8b. Note that a carbon detecting unit (not shown) may be provided on an outlet gas conduit (not shown) which is connected to the CO₂ concentrating facilities 8a and 8b, through which a gas other than the concentrated CO₂ flows. Then, a configuration is possible in which the gas amount or the CO₂ concentration is detected by the carbon detecting unit installed on the outlet gas conduit, and the computation processing device 3 updates the operating conditions of the CO₂ concentrating facilities 8a and 8b as appropriate based on the detected values and the like.

In this way, according to the third embodiment, it becomes possible to reduce the consumed energy of the CO₂ recovery facility 1 and secure the designed purity of recovered CO₂ by increasing the exhaust gas CO₂ concentration. In addition, since the concentrating reduces the flow rate of the exhaust gas from the exhaust gas generation source, the third embodiment also contributes to a reduction in initial cost of conduits.

### <<Fourth Embodiment>>

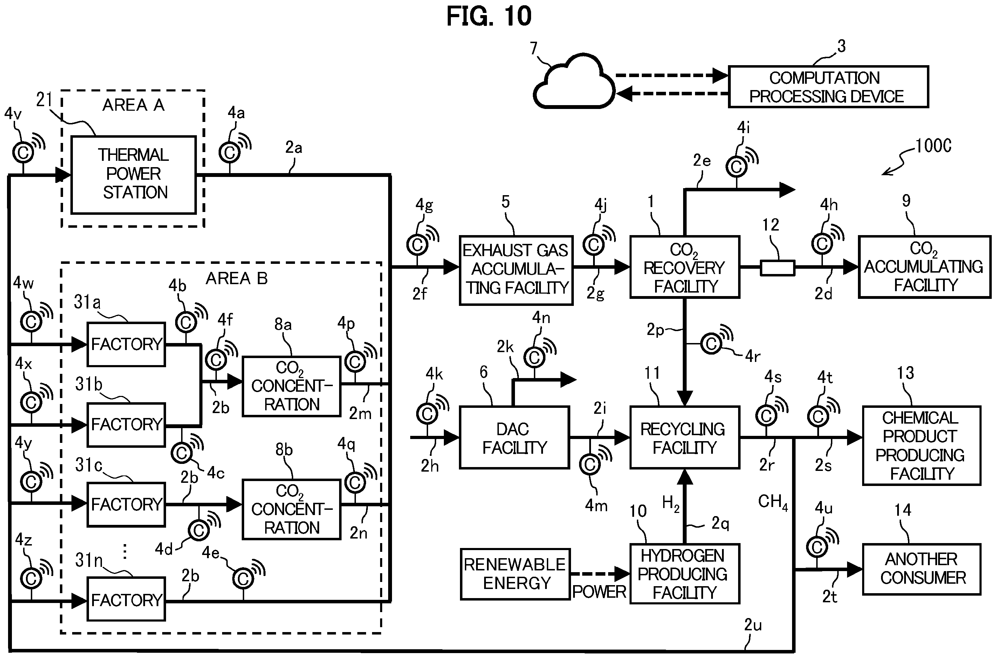

A fourth embodiment is different from the third embodiment (see FIG. 7) in that a carbon management system 100C (see FIG. 10) includes a CO₂ accumulating facility 9 (see FIG. 10), and includes a hydrogen producing facility 10 (see FIG. 10), a recycling facility 11(see FIG. 10), and a CO₂ accumulation flow rate adjusting unit 12(see FIG. 10). Note that the other configurations are the same as in the third embodiment. Hence portions different from the third embodiment will be described, and repetitive description of the same portions will be omitted.

FIG. 10 is a configuration diagram of a carbon management system 100C according to the fourth embodiment.

In the fourth embodiment, a method for operating a recycling facility 11, a CO₂ accumulating facility 9, and the like will be described.

The carbon management system 100C shown in FIG. 10 includes the CO₂ accumulating facility 9, the hydrogen producing facility 10, the recycling facility 11, and the CO₂ accumulation flow rate adjusting unit 12 in addition to the system configuration (see FIG. 7) described in the third embodiment. The CO₂ accumulating facility 9 is a facility which accumulates CO₂ supplied from the CO₂ recovery facility 1 and is provided downstream of the CO₂ recovery facility 1.

The hydrogen producing facility 10 is a facility which produces hydrogen by utilizing a renewable energy power and supplies the hydrogen thus produced to the recycling facility 11. The recycling facility 11 is a facility which conducts recycling by using CO₂ recovered in the CO₂ recovery facility 1 and the DAC facility 6 as a raw material and utilizing hydrogen supplied from the hydrogen producing facility 10. As units for supplying recycled fuel to the thermal power station 21 and the factories 31a to 31n, which are exhaust gas generation sources, or to the chemical product producing facility 13 and the other consumer 14, conduits 2r, 2s, 2t, and 2u, and the like are included. Note that a "conduit" which guides a resource produced in the recycling facility 11 from the recycling facility 11 to the discharge sources is configured to include the conduits 2r and 2u shown in FIG. 10.

The CO₂ accumulation flow rate adjusting unit 12 has a function of adjusting the CO₂ supply amount to be supplied from the CO₂ recovery facility 1 to the CO₂ accumulating facility 9. Note that the configuration is not limited to this configuration in which a renewable energy is supplied to the hydrogen producing facility 10 of FIG. 10. For example, a chemical product and the like may be produced by a method that does not utilize a renewable energy, or hydrogen may be imported from overseas, and the source of procurement of hydrogen is not limited.

The substance recycled in the recycling facility 11 includes, for example, methane and ethanol, but there are a wide variety of substances depending on consumers. In the fourth embodiment, this substance is referred to as the "fuel" or the "resource", there may be one type of substance or a plurality of types of substances.

The CO₂ accumulating facility 9 has a function of temporarily or permanently accumulating CO₂ supplied from the CO₂ recovery facility 1. Examples of temporal accumulation includes a tank which accumulates highly pressurized CO₂, a tank which accumulates frozen CO₂, and the like (accumulates a gas or a liquid and in a supercritical state depending on the temperature. In addition, the method for permanent accumulation includes, for example, a method which liquefies recovered CO₂ and putting CO₂ in a shielding layer from which CO₂ does not leak in the ground, and the like. These are selected as appropriate depending on the operating condition of the system. Note that only temporal accumulation may be used, or only permanent accumulation may be used, or both of two types may be used depending on the circumstances.

As shown in FIG. 10, carbon detecting units 4r to 4z which are capable of measuring the concentration in terms of carbon of carbon-containing components in the gas and the flow rate of the exhaust gas is included besides the carbon detecting units 4a to 4q described in the third embodiment (see FIG. 7). The carbon detecting unit 4r is installed on a conduit 2p which connects the recovered CO₂ side of the CO₂ recovery facility 1 and the recycling facility 11. The carbon detecting unit 4s is installed on the outlet side of the recycling facility 11. The carbon detecting units 4t to 4z are installed on the inlet sides of the exhaust gas generation source, the chemical product producing facility 13, and the other consumer 14 which utilize the fuel or resource produced in the recycling facility 11. In addition, the conduit 2d on which the carbon detecting unit 4h is installed is connected to the CO₂ accumulating facility 9. The conduit 2i on which the carbon detecting unit 4m is installed is connected to the recycling facility 11.

Note that a "third detecting unit" which acquires a concentration in terms of carbon of a carbon-containing component in a gas supplied from the recycling facility 11 to at least one of the plurality of discharge sources and a flow rate of the gas is configured to include the carbon detecting units 4s to 4z.

The computation processing device 3 calculates a fuel use amount or a resource use amount to be used in the exhaust gas generation sources or in production of chemical products from data of the carbon detecting units 4s to 4z acquired by the data collecting system 7, and calculates CO₂ supply amount to the recycling facility 11 from that information. In other words, the computation processing device 3 calculates the fuel use amount to be used in the discharge sources based on the concentration in terms of carbon of the carbon-containing components in the gas and the flow rate of the gas acquired by the carbon detecting units 4s to 4z (third detecting unit), and calculates the CO₂ supply amount necessary in the recycling facility 11 from the fuel use amount to be used in the discharge sources. Moreover, the computation processing device 3 calculates the flow rate of CO₂ to be supplied to the CO₂ accumulating facility 9 from a difference between the CO₂ recovery amount calculated from data of the carbon detecting unit 4j and the CO₂ supply amount to the recycling facility 11.

Then, the computation processing device 3 determines the operating condition of the CO₂ accumulation flow rate adjusting unit 12 from the CO₂ supply amount to the recycling facility 11 and the CO₂ supply amount to the CO₂ accumulating facility 9, and instructs the CO₂ accumulation flow rate adjusting unit 12 about the operating condition. That is, the computation processing device 3 sets the operating condition of the CO₂ accumulation flow rate adjusting unit 12 based on a difference between the CO₂ recovery amount in the CO₂ recovery facility 1 and the CO₂ supply amount necessary in the recycling facility 11.

Note that the computation processing device 3 may have a function of acquiring information on the power supply amount derived from a renewable energy and a demand for a synthetic fuel, and determining the operating condition of the hydrogen producing facility 10 based on these pieces of information. That is, the computation processing device 3 may set the operating condition of the hydrogen producing facility 10 based on the supply amount of the renewable energy power to the hydrogen producing facility 10 and the demand for the synthetic fuel.

In addition, in the configuration including the conduits 2r, 2s, 2t, and 2u as units for supplying the synthetic fuel generated in the recycling facility 11 to at least one of the plurality of discharge sources or another consumer, the computation processing device 3 may calculate the amount of carbon (for example, the amount of CO₂ and CO) contained in the synthetic fuel to be supplied to each consumer.

According to the fourth embodiment, it becomes possible to produce, in the recycling facility 11, a fuel or a resource in an amount necessary in the exhaust gas generation sources and another consumer. In addition, according to the fourth embodiment, it becomes possible to adjust demand and supply in the entire carbon-containing substances including not only CO₂ but also a synthetic fuel recycled using CO₂ as a raw material.

### <<Fifth Embodiment>>

In a fifth embodiment, a method for supplying an appropriate amount of a recycled fuel or resource to an exhaust gas generation source in the case where the operating condition of the exhaust gas generation source has been changed and the amount of the fuel or raw material used has changed will be described. Note that although a variety of products such as a fuel and a resource are produced in the recycling facility 11 (see FIG. 10), those will be collectively described as a "fuel" in the fifth embodiment. Note that the configuration of the carbon management system according to the fifth embodiment is the same as in the fourth embodiment (see FIG. 10), and the description of each configuration will be omitted.

First, a case where any of the operating conditions of the thermal power station 21 and the factories 31a to 31n, which are exhaust gas generation sources, the chemical product producing facility 13, which is a consumer, and another consumer 14 is changed, and the fuel use amount increases in the configuration shown in FIG. 10 will be described. The computation processing device 3 calculates the fuel demand amount of the entire system based on data of the carbon detecting units 4t to 4z acquired by the data collecting system 7. In addition, the computation processing device 3 calculates a production amount of the recycled fuel which can be produced in the recycling facility 11 from the fuel use amount and the amount in terms of carbon acquired from the carbon detecting unit 4a to 4f.

In the case where the fuel demand amount of the entire system exceeds the production amount of the fuel which can be produced in the recycling facility 11, the computation processing device 3 sets the operating condition of the DAC facility 6 such that the CO₂ supply amount additionally necessary in the recycling facility 11 is supplied. Then, the computation processing device 3 causes the necessary amount of CO₂ to be supplied from the DAC facility 6 to the recycling facility 11.

That is, in the case where the operating condition of at least one of the plurality of discharge sources is changed and the fuel use amount increases, the computation processing device 3 first calculates a CO₂ recycling facility supply amount necessary in the recycling facility 11 from the fuel use amount acquired from the carbon detecting units 4s to 4z (third detecting unit). Then, the computation processing device 3 sets the operating condition of the DAC facility 6 which recovers CO₂ in the atmosphere such that the CO₂ recycling facility supply amount additionally necessary is supplied to the recycling facility 11, based on a difference between the CO₂ supply amount from the plurality of discharge sources to the CO₂ recovery facility 1 and the CO₂ recycling facility supply amount. This enables such an adjustment that the fuel supply amount detected in the carbon detecting unit 4s coincides with the fuel demand amount of the entire system.

Moreover, the supply amount of the recycled fuel produced in the recycling facility 11 is adjusted such that the supply amount coincides with the demand of each exhaust gas generation source or the consumer by the carbon detecting units 4t to 4z. Here, although the DAC facility 6 is given to supply the CO₂ supply amount additionally necessary in the recycling facility 11, CO₂ in a necessary amount may be supplied from a predetermined CO₂ accumulating facility (not shown).

Subsequently, a case where any of the operating conditions of the thermal power station 21 and the factories 31a to 31n, which are exhaust gas generation sources, the chemical product producing facility 13, which is the consumer, and another consumer 14 is changed, and the fuel use amount decreases will be described. The computation processing device 3 calculates the fuel demand amount of the entire system based on data of the carbon detecting units 4s to 4z acquired by the data collecting system 7. In addition, the computation processing device 3 calculates the production amount of the recycled fuel which can be produced in the recycling facility 11 from the fuel use amount and the amount in terms of carbon acquired from the carbon detecting units 4a to 4f.

In the case where the above-described fuel demand amount of the entire system falls below the production amount which can be produced in the recycling facility 11, the computation processing device 3 sets the operating condition of the CO₂ accumulation flow rate adjusting unit 12 such that an excess amount of CO₂ is accumulated in the CO₂ accumulating facility 9.

That is, in the case where the fuel use amount of the discharge sources decreases, the computation processing device 3 calculates CO₂ recycling facility supply amount necessary in the recycling facility 11 from the fuel use amount acquired from the carbon detecting units 4s to 4z (third detecting unit), and sets the operating condition of the CO₂ accumulation flow rate adjusting unit 12 based on a difference between the CO₂ supply amount and the CO₂ recycling facility supply amount. This allows the flow rate of CO₂ detected in the carbon detecting unit 4h to coincide with a difference between the amounts of carbon detected by the carbon detecting units 4a to 4f and the amount of carbon adjusted to coincide with the demand for the recycled fuel of the entire system.

According to the fifth embodiment, it becomes possible to control the CO₂ supply amount to the recycling facility 11 to a proper value in the case where the demand for the recycled fuel of each area has increased or decreased.

### <<Modification>>

Although the carbon management system 100 and the like according to the present invention have been described in each embodiment, the present invention is not limited to these descriptions and various modifications can be made.

For example, a part of the configuration described in each embodiment may be omitted as appropriate. In addition, the embodiments may be combined as appropriate.

For example, although in the fourth and fifth embodiments (see FIG. 10), the configuration in which CO₂ is supplied to the recycling facility 11 from both of the CO₂ recovery facility 1 and the DAC facility 6, the configuration is not limited to this. That is, a configuration is possible in which CO₂ recovered in the CO₂ recovery facility 1 or CO₂ recovered in the DAC facility 6, which recovers CO₂ in the atmosphere, is used as a raw material in the recycling facility 11.

In addition, all or some of programs which achieve the functions of the carbon management system 100 and the like described in each embodiment (carbon management method) may be executed by one or a plurality of computers such as a server (not shown). All of some of the above-described programs may be achieved with hardware by designing with integrated circuits to be. In addition, the configurations and functions described in the embodiments may be achieved with software by a processor interpreting and executing programs which achieve the respective functions. Information of programs, tables, files and the like to achieve each function may be stored in a storage apparatus such as a memories, a hard disk, or an SSD (Solid State Drive), or a storage medium such as an IC card, a SD card, a CD-ROM, or a DVD. It is also possible to provide the above-described programs through a communication line.

In addition, each embodiment has been described in detail for describing the present invention in an easily understandable manner, and is not limited to those including all the described configurations. In addition, a part of the configuration of each embodiment may be added, deleted, or replaced with another configuration. In addition, the above-described mechanisms and configurations are shown as those which are considered to be necessary for the description, and all the mechanisms and configurations are not necessarily shown in terms of products.

### Reference Signs List

1 CO₂ recovery facility
2a, 2b, 2c, 2d, 2e, 2f, 2g, 2h, 2i, 2k, 2m, 2n, 2p, 2q, 2r, 2s, 2t, 2u conduit
3 computation processing device
4a, 4b, 4c, 4d, 4e, 4f, 4g carbon detecting unit (first detecting unit)
4h, 4i carbon detecting unit (second detecting unit)
4s, 4t, 4u, 4v, 4w, 4x, 4y, 4z carbon detecting unit (third detecting unit)
5 exhaust gas accumulating facility (exhaust gas storing unit)
6 DAC facility
7 data collecting system
8a, 8b CO₂ concentrating facility (CO₂ concentration adjusting facility)
9 CO₂ accumulating facility
10 hydrogen producing facility
11 recycling facility
12 CO₂ accumulation flow rate adjusting unit
21 thermal power station (discharge source)
31a, 31b, 31c, ..., 31n factory (discharge source)
100, 100A, 100B, 100C carbon management system

## Claims

1. A carbon management system comprising:
a plurality of discharge sources which discharge an exhaust gas containing CO₂;
a CO₂ recovery facility which separates and recovers CO₂ from the exhaust gas discharged from the plurality of discharge sources;
a conduit which is provided between the plurality of discharge sources and the CO₂ recovery facility such that the exhaust gas discharged from the discharge sources is collected in the CO₂ recovery facility; and
a computation processing device which sets an operating condition of at least one of the plurality of discharge sources or an operating condition of the CO₂ recovery facility.

2. A computation processing device for use in a carbon management system including: a plurality of discharge sources which discharges an exhaust gas containing CO₂; a CO₂ recovery facility which separates and recovers CO₂ from the exhaust gas discharged from the plurality of discharge sources; and a conduit which is provided between the discharge source and the CO₂ recovery facility such that the exhaust gas discharged from the plurality of discharge sources is collected in the CO₂ recovery facility, wherein
the carbon management system includes:
a first detecting unit which acquires a concentration in terms of carbon of a carbon-containing component in the exhaust gas discharged from the discharge sources and a flow rate of the exhaust gas; and
a second detecting unit which acquires a concentration in terms of carbon of a carbon-containing component in a gas discharged from the CO₂ recovery facility and a flow rate of the gas,
the computation processing device comprises a computation processing function of setting an operating condition of at least one of the plurality of discharge sources or the CO₂ recovery facility, and a management function of managing at least one of the plurality of discharge sources and the CO₂ recovery facility, based on data acquired by the first detecting unit and the second detecting unit.

3. The computation processing device according to claim 2, wherein
the carbon management system includes, between the plurality of discharge sources and the CO₂ recovery facility, a CO₂ concentration adjusting facility which adjusts a CO₂ concentration of the exhaust gas discharged from at least one of the plurality of discharge sources, and
the computation processing device sets an operating condition of the CO₂ concentration adjusting facility such that a carbon concentration in the exhaust gas to be supplied to the CO₂ recovery facility falls within a set numerical range, based on the carbon concentration acquired by the first detecting unit.

4. The computation processing device according to claim 2, wherein
the carbon management system further includes a DAC facility which recovers CO₂ in the atmosphere,
the computation processing device calculates a CO₂ supply amount from the plurality of discharge sources to the CO₂ recovery facility based on a carbon concentration and a flow rate of the exhaust gas acquired by the first detecting unit, in a case where the CO₂ supply amount exceeds a designed value of the CO₂ recovery facility, supplies the exhaust gas in an amount of the designed value of the CO₂ recovery facility from the plurality of discharge sources to the CO₂ recovery facility, calculates an excess CO₂ amount by which the CO₂ supply amount exceeds the designed value of the CO₂ recovery facility from the CO₂ supply amount and the designed value, and sets an operating condition of the DAC facility in such a manner as to recover the excess CO₂ amount.

5. The computation processing device according to claim 2, wherein
the carbon management system further includes an exhaust gas storing unit,
the computation processing device calculates a CO₂ supply amount from the plurality of discharge sources to the CO₂ recovery facility based on a carbon concentration and a flow rate of the exhaust gas acquired by the first detecting unit, in a case where the CO₂ recovery amount exceeds a designed value of the CO₂ recovery facility, temporarily stores the exhaust gas in an amount by which the CO₂ recovery amount exceeds the designed value in the exhaust gas storing unit, and in a case where the CO₂ supply amount has become equal to or lower than the designed value of the CO₂ recovery facility, sets an operating condition of the exhaust gas storing unit such that the exhaust gas is supplied from the exhaust gas storing unit to the CO₂ recovery facility in such a range that does not exceed the designed value of the CO₂ recovery facility.

6. The computation processing device according to claim 2, wherein
the computation processing device calculates a CO₂ supply amount to be supplied from the plurality of discharge sources to the CO₂ recovery facility based on a carbon concentration and a flow rate of the exhaust gas acquired by the first detecting unit, and calculates a reduction amount of a CO₂ discharge amount to be discharged from the discharge sources such that the CO₂ supply amount to be supplied to the CO₂ recovery facility falls within a designed value of the CO₂ recovery facility.

7. The computation processing device according to claim 2, wherein
the carbon management system further includes:
a recycling facility which uses, as a raw material, CO₂ recovered in the CO₂ recovery facility or CO₂ recovered in a DAC facility which recovers CO₂ in the atmosphere;
a CO₂ accumulating facility which accumulates CO₂ supplied from the CO₂ recovery facility;
a CO₂ accumulation flow rate adjusting unit which adjusts a CO₂ supply amount to be supplied from the CO₂ recovery facility to the CO₂ accumulating facility;
a conduit which guides a resource produced in the recycling facility from the recycling facility to the discharge source; and
a third detecting unit which acquires a concentration in terms of carbon of a carbon-containing component in a gas supplied from the recycling facility to at least one of the plurality of discharge sources and a flow rate of the gas,
the computation processing device calculates a fuel use amount to be used in the discharge sources based on the concentration in terms of carbon of the carbon-containing component in the gas and the flow rate of the gas acquired by the third detecting unit, calculates a CO₂ supply amount necessary in the recycling facility from the fuel use amount to be used in the discharge sources, and sets an operating condition of the CO₂ accumulation flow rate adjusting unit based on a difference between a CO₂ recovery amount in the CO₂ accumulating facility and the CO₂ supply amount necessary in the recycling facility.

8. The computation processing device according to claim 7, wherein
the carbon management system further includes a hydrogen producing facility which supplies hydrogen to the recycling facility,
the recycling facility recycles CO₂ and hydrogen from the hydrogen producing facility as raw materials, and
the computation processing device sets an operating condition of the hydrogen producing facility based on a supply amount of a renewable energy power to the hydrogen producing facility and a demand for a synthetic fuel.

9. The computation processing device according to claim 8, comprising
a unit which supplies a synthetic fuel generated in the recycling facility to at least one of the plurality of discharge sources or another consumer, wherein
the computation processing device calculates an amount of carbon contained in the synthetic fuel to be supplied to each consumer.

10. The computation processing device according to claim 8, wherein
in a case where an operating condition of at least one of the plurality of discharge sources is changed and a fuel use amount increases, the computation processing device calculates a CO₂ recycling facility supply amount necessary in the recycling facility from the fuel use amount acquired from the third detecting unit, and sets an operating condition of the DAC facility which recovers CO₂ in the atmosphere such that the CO₂ recycling facility supply amount additionally necessary is supplied to the recycling facility, based on a difference between the CO₂ supply amount from the plurality of discharge sources to the CO₂ recovery facility and the CO₂ recycling facility supply amount, and further in a case where the fuel use amount of the discharge source decreases, the computation processing device calculates a CO₂ recycling facility supply amount necessary in the recycling facility from the fuel use amount acquired from the third detecting unit, and sets an operating condition of the CO₂ accumulation flow rate adjusting unit based on a difference between the CO₂ supply amount and the CO₂ recycling facility supply amount.

11. The carbon management system according to claim 1, wherein the CO₂ recovery facility is provided in a site where any of the plurality of discharge sources is disposed.
